# EUROPÄISCHE PATENTSCHRIFT

(11) **EP 0 675 018 B1**
(45) Veröffentlichungstag und Bekanntmachung des Hinweises auf die Patenterteilung: **21.10.1998**
(21) Anmeldenummer: 95101015.6
(22) Anmeldetag: 26.01.1995
(51) Int. Cl.: B60K 35/00

(54) **Informationsvorrichtung für bedienbare Geräte von Kraftfahrzeugen**
Indicating device for operable apparatus in motor vehicles
Dispositif indicateur pour des appareils manoeuvrables dans des véhicules à moteur

(30) Priorität: 30.03.1994 DE 4410985
(43) Veröffentlichungstag der Anmeldung: 04.10.1995
(73) Patentinhaber: Bayerische Motoren Werke Aktiengesellschaft, 80788 München (DE)
(72) Erfinder: Reichart, Günter, D-85551 Kirchheim (DE)

(56) Entgegenhaltungen:
- EP-A- 0 122 043
- EP-A- 0 461 360
- DE-C- 3 514 438
- FR-A- 2 667 026

## Beschreibung

Die Erfindung bezieht sich auf ein Kraftfahrzeug nach dem Oberbegriff des Patentanspruchs 1.

Ein derartiges Kraftfahrzeug ist aus der EP 199 916 B1 bekannt. Dabei werden den Geräten Symbole auf dem Bildschirm zugeordnet, die in Verbindung mit einer zusätzlichen Tastatur die Auslösung der durch das Symbol wiedergegebenen Funktion ermöglichen. Die Geräte werden damit zentral bedienbar. Diese zentrale Bedieneinrichtung hat, bezogen auf das zu bedienende Gerät, eine Dezentralisierung des Bedienvorgangs zur Folge. Da ein und derselbe Tastschalter für die Bedienung verschiedener Geräte dient, erfolgt diese Bedienung für den Fahrzeugbenutzer in der Regel nicht exakt vorhersehbar, da beispielsweise der Schaltpunkt eines derartigen Tastschalters für den Fahrzeugbenutzer nicht wahrnehmbar ist. Hinzu kommt die Trägheit und/oder Hysterese der häufig die Einstellung eines Geräts vornehmenden Antriebsmotoren mit der Folge, daß der Bedienvorgang ohne räumliche und taktile Zuordnungen zwischen dem Bedienelement und dem bedienbaren Geräten erfolgt. Ferner ist die nur durch das Symbol des Geräts bzw. einstellbaren Funktion gegeben optische Unterstützung des Fahrzeugbenutzers während des Bedienvorgangs nicht ausreichen.

Der Erfindung liegt die Aufgabe zugrunde, ein Kraftfahrzeug der eingangs genannten Art zu schaffen, die unter Beibehaltung der üblichen direkten Bedienbarkeit verschiedener Geräte eine optimale optische Unterstützung des Fahrzeugbenutzers ermöglicht.

Die Erfindung löst diese Aufgabe durch die kennzeichnenden Merkmale des Patentanspruchs 1.

Die Geräte besitzen weiterhin die üblichen und jedem Fahrzeugbenutzer geläufigen Bedienelemente. Die Bildschirmanzeige unterstützt den Bedienvorgang optisch, indem wesentliche Informationen hierfür auf der Bildschirmanzeige wiedergegeben werden. Im Gegensatz zu dem heute üblichen Verfahren, bei dem der Fahrzeugbenutzer Informationen über das Gerät, das Bedienelement oder die damit steuerbare Funktion mit Hilfe einer schriftlich vorliegenden Bedienungsanleitung erhält, werden nunmehr entsprechende Informationen auf dem Bildschirm wiedergegeben. Das häufig mühsame Suchen in der Bedienungsanleitung entfällt. Vielmehr wird durch das Betätigen des Bedienelements selbst die zugehörige Information aus dem Speicher ausgewählt und bildlich dargestellt. Als Speicher bietet sich beispielsweise ein Massenspeicher in Form einer CD-ROM an, der immer mehr an Bedeutung gewinnt.

Die wiedergegeben Daten können je nach Ausgestaltung der Erfindung nicht auf die eigentliche Funktion des Bedienelements beschränkt sein. sie können auch sich daran anschließende Funktionen, vorteilhaft zu bedienende andere Bedienelemente oder sich ergebende Abläufe beinhalte. Die Daten sind dann nicht auf das Bedienelement selbst beschränkt, sondern ermöglichen von dessen Betätigung ausgehend den weiteren sinnvollen Gebrauch des Kraftfahrzeugs.

Ein Beispiel hierfür ist die Anzeige der gesamten Klangeinstellung (z.B. Höhen, Bässe, Loundness, Equalizer, Hall, Fader) eines Soundsystems nach Berühren eines Klangeinstellers (z.B. Höhen) im Help- oder Instruction-Mode.

Die eingestellte eigene Betriebsart kann die Bedienung der Geräte unterstützen. Die Bedienelemente behalten dabei ihre Funktion. Auf dem Bildschirm wir die dazugehörige Information wiedergegeben. Alternativ kann diese Betriebsart auch bei aufgehobener Funktion der Bedienelemente eingestellt sein. Diese Möglichkeit bietet sich bei Geräten an, die von umfangreicheren Informationen begleitet sind. Ein Beispiel hierfür stellt eine Klimaanlage dar, die in verschiedene Betriebsarten einstellbar ist. Durch die Erfindung wird dann anstelle des Einstellens der Betriebsart, mögliche Alternativen und/oder über die in der Betriebsart wirksamen Komponenten der Klimaanlage wiedergegeben.

Die Wiedergabe der zugehörigen Informationen kann im Anschluß an das Betätigen des Bedienelements erfolgen. Es ist auch möglich, diese Information vor dem Betätigen des Bedienelements darzustellen. Hierzu kann das Bedienelement beispielsweise mit einem Berührungsfühler oder einem Annäherungssensor verbunden sein, der den Zugriff auf den Speicher steuert.

Zum leichteren Auffinden oder zum besseren Verständnis des Bedienelements kann die Anzeige der Daten auch mit der Wiedergabe eines graphischen Abbilds des Bedienelements vor und nach Ausführen des Bedienelements verbunden sein. Der Fahrzeugbenutzer erhält damit eine weitere Hilfe, die ihm ermöglicht, möglichst rasch und auch in der gewünschten Weise das jeweilige Gerät zu bedienen.

Weitere Ausgestaltungen der Erfindung bestehen darin, die Bedienelemente während der Betriebsart optisch hervorzuheben. Sie können beispielsweise allein oder heller beleuchtet sein. Auch können zusammengehörende Bedienelemente, die zu einer Bedieneinheit zusammengefaßt sind (alle Schalter für die Fahrzeugbeleuchtung oder alle Bedienelemente einer Klimaanlage) gemeinsam oder durch einen beleuchteten Rahmen hervorgehoben werden, wenn die Funktionen eines der Bedienelemente mittels des Bildschirms erläutert wird. Auch kann zusätzlich eine akustische Information über das Bedienelement ausgegeben werden.

## Patentansprüche

1. Kraftfahrzeug mit bedienbaren Geräten und mit einer Informationsvorrichtung, die einen Bildschirm und eine Auswahleinrichtung für verschiedene Betriebsarten der Bildschirmanzeige besitzt, gekennzeichnet durch eine eigene Betriebsart ("Bedienerinformation"), bei der den Geräten individuell zugeordnete Bedienelemente durch das Betätigen des Bedienelements selbst eine Steuervorrichtung für einen Speicher ansteuern, die daraus den Bedienelementen zugeordnete Daten entnimmt und zur Anzeige auf dem Bildschirm bringt.

2. Kraftfahrzeug nach Anspruch 1, dadurch gekennzeichnet, daß die Daten auf die Funktion des Bedienelements bezogen sind.

3. Kraftfahrzeug nach Anspruch 1, dadurch gekennzeichnet, daß sich die Daten auf Funktionen und/oder Bedienelemente beziehen, die im Anschluß an das betätigte Bedienelement auslösbar bzw. betätigbar sind.

4. Kraftfahrzeug nach einem der Ansprüche 1 bis 3, dadurch gekennzeichnet, daß die Einstellung der eigenen Betriebsart bei aufgehobener Funktion des Bedienelements erfolgt.

5. Kraftfahrzeug nach einem der Ansprüche 1 bis 3, dadurch gekennzeichnet, daß die eigene Betriebsart zusätzlich zur Funktion des Bedienelements erfolgt.

6. Kraftfahrzeug nach einem der Ansprüche 1 bis 5, dadurch gekennzeichnet, daß die Anzeige der Daten unmittelbar vor Betätigen des Gerätes erfolgt.

7. Kraftfahrzeug nach einem der Ansprüche 1 bis 6, dadurch gekennzeichnet, daß in Verbindung mit der Wiedergabe der Daten auch eine graphische Darstellung des Bedienelements verbunden ist.

8. Kraftfahrzeug nach einem der Ansprüche 1 bis 7, dadurch gekennzeichnet, daß die einzelnen Bedienelemente während der eigenen Betriebsart zusätzlich selbst optisch hervorgehoben sind.

## Claims

1. A motor vehicle with controllable pieces of equipment and with an information device, which has a screen and a selection mechanism for different operating modes which have displays on the screen, characterised by an individual mode of operation ("user information"), in which the individual control elements allocated to the pieces of equipment initiate a control device for a store, which abstracts therefrom the data associated with the control element and brings it onto the screen for display.

2. A motor vehicle according to Claim 1, characterised in that the data is related to the function of the control element.

3. A motor vehicle according to Claim 1, characterised in that the data is related to the functions and/or control elements, which can be activated or operated in connection with the activated operating element.

4. A motor vehicle according to one of Claims 1 to 3, characterised in that the setting of individual operating modes is effected by extended function of the control element.

5. A motor vehicle according to one of Claims 1 to 3, characterised in that the actual operating mode is effected in addition to the function of the control element.

6. A motor vehicle according to one of Claims 1 to 5, characterised in that the display of the data is effected immediately before the operation of the equipment.

7. A motor vehicle according to one of Claims 1 to 6, characterised in that in combination with the reproduction of data a graphical presentation is also combined.

8. A motor vehicle according to one of Claims 1 to 7, characterised in that the individual control elements are themselves additionally optically highlighted.

## Revendications

1. Véhicule automobile équipé d'appareils susceptibles d'être commandés ainsi que d'un dispositif d'information comprenant un écran image et une installation de sélection pour les différents modes de fonctionnement avec affichage sur un écran image,
caractérisé par
un mode de fonctionnement propre (〈〈 information pour l'utilisateur 〉〉) selon lequel des éléments de commande associés individuellement aux appareils sont commandés par l'actionnement de l'élément de commande lui-même d'un dispositif de commande d'une mémoire qui prend les données associées aux éléments de commande et les affiche sur l'écran.

2. Véhicule automobile selon la revendication 1,
caractérisé en ce que
les données sont rapportées à la fonction de l'élément de commande.

3. Véhicule automobile selon la revendication 1,
caractérisé en ce que
les données se rapportent à des fonctions et/ou des éléments de commande qui sont déclenchés ou actionnés en liaison avec l'élément de commande actionné.

4. Véhicule automobile selon l'une quelconque des revendications 1 à 3,
caractérisé en ce que
le réglage du mode de fonctionnement propre se fait lorsque la fonction de l'élément de commande est suspendue.

5. Véhicule automobile selon l'une quelconque des revendications 1 à 3,
caractérisé en ce que
le mode de fonctionnement propre se fait en plus de la fonction de l'élément de commande.

6. Véhicule automobile selon l'une quelconque des revendications 1 à 5,
caractérisé en ce que
l'affichage des données se fait directement avant l'actionnement de l'appareil.

7. Véhicule automobile selon l'une quelconque des revendications 1 à 6,
caractérisé en ce qu'
en liaison avec la reproduction des données, on a également une représentation graphique de l'élément de commande.

8. Véhicule automobile selon l'une quelconque des revendications 1 à 7,
caractérisé en ce que
les différents éléments de commande sont soulignés en plus eux-mêmes de manière optique pendant le mode de fonctionnement propre.
